# EUROPÄISCHE PATENTSCHRIFT

(11) **EP 0 752 688 B1**
(45) Veröffentlichungstag und Bekanntmachung des Hinweises auf die Patenterteilung: **03.11.1999**
(21) Anmeldenummer: 96116068.6
(22) Anmeldetag: 10.03.1994
(51) Int. Cl.: G07B 15/00, G01C 21/20, G01S 5/14

(54) **Nutzungsabrechnungssystem mit einer Einrichtung zur Identifizierung von Wegstrecken**
Utility accounting system including a road distances identifying device
Système de comptabilisation d'utilisation avec dispositif pour identifier les distances routières

(30) Priorität: 23.03.1993 DE 4310099
(43) Veröffentlichungstag der Anmeldung: 08.01.1997
(62) Teilanmeldung aus: 94910331.1
(73) Patentinhaber: MANNESMANN Aktiengesellschaft, 40213 Düsseldorf (DE)
(72) Erfinder: Widl, Andreas, 82166 Gräfelfing-Lochham (DE)
(74) Vertreter: Meissner, Peter E., Dipl.-Ing.

(56) Entgegenhaltungen:
- EP-A- 0 425 961
- EP-A- 0 508 405
- EP-A- 0 519 630
- DE-A- 3 537 730
- DE-A- 3 908 702
- GB-A- 2 248 957
- KOMANECKY: "IVHS applications of smart cards" VEHICLE NAVIGATION & INFORMATION SYSTEMS CONFERENCE PROCEEDINGS, 1.Oktober 1991, WARRENDALE, USA, Seiten 977-987, XP000357202
- KIRSON: "ATIS - a modular approach" IEEE PLANS '92 POSITION LOCATION AND NAVIGATION SYMPOSIUM, 1.Januar 1992, Seiten 528-533, XP000344347
- SUCHOWERSKYJ: "vehicle navigation and information systems in Europe - an overview" VEHICLE ELECTRONICS IN THE 90'S: PROCEEDINGS OF THE INTERNATIONAL CONGRESS ON TRANSPORTATION ELECTRONICS, Oktober 1990, WARRENDALE, USA, Seiten 209-215, XP000223545

## Beschreibung

Die Erfindung betrifft ein Nutzungsabrechnungssystem mit einer Einrichtung zur Identifizierung von Wegstrecken, die von einem bewegten Objekt innerhalb eines Wegstreckennetzes zurückgelegt werden, oder von geographischen Zonen, die vom Objekt betreten werden, für ein Nutzungsabrechnungssystem.

Zur Abrechnung von Gebühren für die Nutzung von Brücken oder Tunneln sind grenzstationsähnliche Abrechnungsstationen üblich, an denen durch Personal oder Münzzahlungsautomaten die jeweilige Gebühr erhoben wird. Zur Gebührenabrechnung von Autobahnabschnitten wird in Frankreich und Italien ein System benutzt, bei dem an der Einfahrstelle der Autobahn und an der Übergangsstelle von einem gebührenfreien zu einem gebührenpflichtigen Autobahnabschnitt jeweils vom Fahrzeugführer ein Ticket gezogen wird, auf dem die Einfahrstelle maschinell lesbar vermerkt ist. An der Ausfahrstelle oder an der Übergangsstelle von einem gebührenpflichtigen zu einem gebührenfreien Autobahnabschnitt kann dann anhand dieses Tickets die benutzte Gesamtstrecke ermittelt und die jeweilige Benutzungsgebühr berechnet und kassiert werden. Dieses System gestattet zwar eine sichere Abrechnung, setzt aber den Einsatz nicht nur erheblicher Investitionsmittel zur Schaffung der erforderlichen Infrastruktur, insbesondere für den Bau von Abrechnungsstationen mit Ticketautomaten, Schranken und Lichtanlagen usw. voraus, sondern erfordert auch einen erheblichen Personalaufwand für den Tag- und Nachtbetrieb der Abrechnungsstationen. Hinzu kommt der große Nachteil, daß der Verkehrsfluß insbesondere zu Verkehrsspitzenzeiten durch die Abrechnungstätigkeiten stark beeinträchtigt wird.

Um diesen Aufwand nicht treiben zu müssen, wird in der Schweiz seit mehreren Jahren ein anderes System zur Eintreibung von Autobahnbenutzungsgebühren angewendet, das auf der Basis einer pauschalen Bezahlung für einen festgelegten Zeitraum arbeitet. Gegen Entrichtung der Pauschalgebühr erhält der Fahrzeugführer eine Vignette, die sichtbar im Fahrzeug anzubringen ist und die Berechtigung zum Befahren der Autobahn nach außen erkennbar und somit kontrollierbar dokumentiert. Dieses System erfordert keine wesentlichen Infrastrukturaufwendungen, da auf ohnehin vorhandene Einrichtungen beim Verkauf der Vignetten (z.B. Postämter, Grenzstationen) und der Kontrolle (z.B. Autobahngrenzübergänge, Polizeistreifen) zurückgegriffen werden kann. Damit ist aber keine Abrechnung möglich, die dem tatsächlichen Umfang der Benutzung entspricht, so daß das Verursacherprinzip bei der Kostenzurechnung nur unzureichend berücksichtigt wird.

Es sind auch bereits Systeme vorgeschlagen worden, die eine individuelle Abrechnung nach dem tatsächlichen Nutzungsumfang gestatten. Sie setzen aber die Schaffung einer geeigneten lokalen Infrastruktur voraus, da sie beispielsweise auf Infrarot-Systemen oder sogenannten HF- oder RF-Transpondersystemen basieren, also auf speziellen maschinellen Einrichtungen zur Erkennung und Identifizierung einzelner Fahrzeuge auf den jeweiligen gebührenpflichtigen Wegstrecken oder entsprechenden festgelegten geographischen Zonen wie etwa eines Innenstadtbereichs, in dem der Autoverkehr gedrosselt werden soll. Die Transpondertechnik ist aus dem Bereich des militärischen Flugverkehrs seit Jahren bekannt, um bei fliegenden Objekten feindliche von freundlichen unterscheiden zu können. Das Prinzip dabei ist, daß ein zu identifizierendes Objekt von einer Kontrollstelle (z.B. eine Bodenstation, ein Schiff oder ein Flugzeug) "angefunkt" wird (z.B. mittels Radar) und dann automatisch ein geeignetes Erkennungssignal an die jeweilige Kontrollstelle sendet. Übertragen auf z.B. ein Autobahngebührenabrechnungssystem bedeutet dies, daß entlang des gebührenpflichtigen Autobahnstreckennetzes an bestimmten Stellen (insbesondere Ein- und Ausfahrten) entsprechende maschinelle Kontrollstellen geschaffen werden müssen, um eine lückenlose Erfassung der zur Nutzungsabrechnung notwendigen Daten zu ermöglichen. Somit erfordert ein derartiges System einen erheblichen Aufwand für die Einrichtung einer flächendeckenden speziellen Infrastruktur.

EP-A-0.519.630 offenbart eine Einrichtung zur Identifizierung von Wegstrecken mit den Merkmalen a) - f) des Anspruches 1.

Aufgabe der Erfindung ist es, eine Einrichtung der eingangs geschilderten Art vorzuschlagen, die nicht nur zur Abrechnung von Autobahngebühren, sondern auch für die Erfassung anderer Nutzungen definierter Gebiete (Strecken, Flächen, Räume) durch bewegte Objekte geeignet ist und vergleichsweise weniger infrastrukturellen Aufwand erfordert.

Gelöst wird diese Aufgabe erfindungsgemäß mit den Merkmalen des Patentanspruchs 1. Vorteilhafte Weiterbildungen der Erfindung sind in den Unteransprüchen 2 bis 21 angegeben.

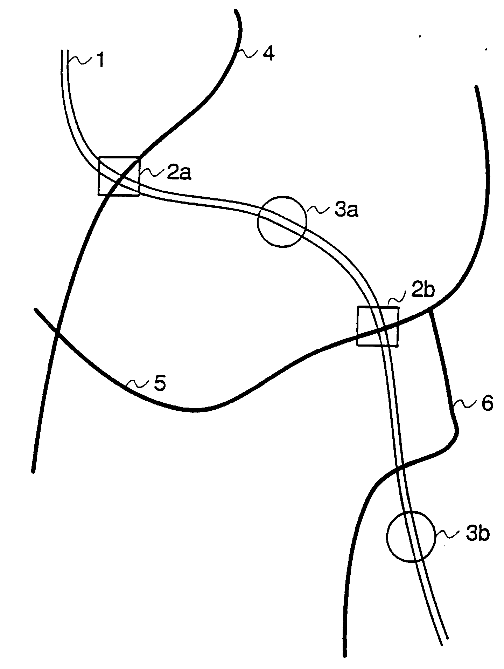

Nachfolgend wird die Erfindung am Beispiel eines Autobahnbenutzungsgebührenabrechnungssystems näher beschrieben. Die einzige Figur zeigt einen Ausschnitt aus einem Straßennetz mit Autobahn.

Das erfindungsgemäße System wird aus drei Funktionshauptblöcken gebildet, nämlich aus:
- einem fahrzeuginternen Positionserfassungssystem,
- einem fahrzeuginternen Abrechnungssystem und
- einem mobilen Speichermedium als Abrechnungsdatenträger.

Das Positionserfassungssystem weist ein System zum Empfang von Informationen zur Erkennung der aktuellen geographischen Position des Fahrzeugs und eine erste Speichereinrichtung zur temporären Speicherung der aktuellen Position auf. Die Informationen zur Positionserkennung werden auf drahtlosem Wege von einem unabhängig vom Autobahnnetz installierten System empfangen. Dieses System ist vielfach ohnehin bereits vorhanden oder kann mit vergleichsweise wenig Aufwand auf die Aufgabe zur Aussendung entsprechender Informationen eingerichtet werden. Beispiele hierfür sind vorhandene Satellitennavigationssysteme (z.B. GPS, Glonass) oder Funkpeilsysteme auf der Basis vorhandener Funktelefonnetze (z.B. C-, D-, E-Netz), wobei aufgrund unterschiedlicher Signallaufzeiten zu benachbarten Bodenstationen eine sehr genaue Positionsbestimmung erfolgen kann. Bei Satellitennavigationssystemen kann es zur Erhöhung der Genauigkeit der Positionsermittlung zweckmäßig sein, eine Empfangsmöglichkeit für ein Korrektursignal vorzusehen (z.B. für das Differential-GPS-System). Dadurch werden Fehlereinflüsse wie etwa Satellitenbahnfehler, Uhrenfehler und Signalausbreitungsfehler kompensiert und eine Ortsauflösung auf unter 10 m möglich. Ein solches Korrektursignal könnte beispielsweise über den Rundfunk (z.B. RDS) oder über ein GSM-Funktelefonnetz ausgesendet werden. Es sind auch Systeme möglich, die die Fahrzeugposition aus Funkkontakt und aus im Fahrzeug installierter Sensorik ermitteln. Beispielsweise können ein Sensor zur Ermittlung des Fahrweges (z.B. über die Umdrehung der Hinterräder) und eine Magnetfeldsonde vorgesehen sein, die eine genaue Ortsbestimmung anhand eines digitalisierten Straßennetzes ermöglichen, wenn jeweils vor Fahrtbeginn die Fahrzeugposition über eine fahrzeuginterne Kommunikationseinrichtung eingeholt wird. Um bei einem kurzzeitigen Ausfall eines Positionserfassungssystem (z.B. durch Abschirmeffekte oder durch ungünstige Satellitenstellung) eine kontinuierliche Fortschreibung der Positionsdaten zu ermöglichen, kann ein "Dead-Reckoning-Sensor" (z.B. in Form einer Magnetfeldsonde) vorgesehen sein, der vom Fahrzeug mitgeführt wird.

Das fahrzeuginterne Abrechnungssystem beinhaltet zunächst eine zweite Speichereinrichtung zur permanenten Speicherung vorgegebener geographischer Positionen (Identifizierungspunkte), die eine eindeutige Charakterisierung der einzelnen Wegstrecken des Wegstreckennetzes und/oder der festgelegten Zonen erlauben. Weiterhin ist eine Recheneinheit vorhanden, die als Vergleichseinrichtung arbeitet und ständig in kurzen Abständen (z.B. jede Sekunde ein- oder zweimal) die aktuelle Fahrzeugposition mit den gespeicherten Positionsdaten (Koordinaten) der Identifizierungspunkte vergleicht. Wenn sich eine hinreichend genaue Übereinstimmung der Positionsdaten ergibt, identifiziert die Recheneinrichtung die zu diesem Identifikationspunkt zuordbare Autobahnteilstrecke, die gerade befahren wird. Dies wird weiter unten noch näher erläutert.

Die Benutzung identifizierter Autobahnteilstrecken wird von der Recheneinrichtung auf einem mobilen Speichermedium verbucht. Unter einem solchen mobilen Speichermedium ist eine Einrichtung zu verstehen, die vom Fahrer des Fahrzeugs mitgeführt werden kann und im Benutzungsfall über eine Lese/Schreib-Einrichtung informationstechnisch mit der Recheneinrichtung verbindbar ist. Vorzugsweise ist dieses mobile Speichermedium als Magnetstreifen- oder Chip-Speicherkarte ausgebildet. Aber auch andere Medien sind denkbar, beispielsweise programmierbare Speicherbausteine wie PAL-, FPLA- oder FPLS-Bausteine.

Für den Fall, daß die vom Positionserfassungssystem extern empfangenen Informationen noch keine Positionsdaten im engeren Sinne sind, übernimmt die Recheneinrichtung zusätzlich die Aufgabe, aus diesen Informationen die Koordinaten der jeweiligen Fahrzeugposition zu errechnen. Die zweite Speichereinrichtung mit den Positionsdaten der Identifikationspunkte kann körperlich in die erste Speichereinrichtung integriert sein. Vorteilhaft kann es aber auch sein, die zweite Speichereinrichtung in das mobile Speichermodul zu integrieren.

Das Prinzip der Nutzungsabrechnung kann anhand des in der Figur dargestellten Ausschnitts eines Streckennetzes verdeutlicht werden, das neben einer gebührenpflichtigen Autobahn 1 auch gebührenfreie Straßen 4, 5, 6 aufweist, die die Autobahn 1 kreuzen. Die Ein/Ausfahrten 2a und 2b der Autobahn 1 sind mit Quadraten gekennzeichnet. Die geographischen Positionen dieser gekennzeichneten Stellen sind als Identifikationspunkte in der zweiten Speichereinrichtung gespeichert. Wenn nun von der Recheneinrichtung eine aktuelle Fahrzeugposition erkannt wird, die mit der Position des Quadrats 2a oder 2b (mit vorgegebener Genauigkeit) übereinstimmt, dann kann dies bedeuten, daß sich das Fahrzeug auf einem gebührenpflichtigen Autobahnabschnitt befindet. Es könnte aber auch sein, daß lediglich eine Überquerung der Autobahn 1 auf der gebührenfreien Straße 4 bzw. 5 stattfindet. Auch das spätere Passieren eines zweiten Quadrats läßt in dieser Hinsicht noch keine eindeutige Aussage zu. So kann man beispielsweise vom Quadrat 2a über die Straßen 4 und 5 auch zu dem Quadrat 2b gelangen, also ebenso wie über die Autobahn 1. Aus diesem Grunde ist vorgesehen, daß zwischen zwei unmittelbar benachbarten Ein/Ausfahrten der Autobahn 1 jeweils mindestens ein weiterer (durch einen Kreis markierter) auf der Autobahn 1 liegender Identifikationspunkt 3a, 3b vorgegeben und gespeichert ist. Dieser weitere Identifikationspunkt ermöglicht, wenn er nach einer identifizierten Ein/Ausfahrtstelle passiert wird, eine völlig eindeutige Aussage darüber, welches Autobahnteilstück gerade benutzt wird, so daß eine entsprechende Verbuchung zur Kostenabrechnung auf dem mobilen Speichermedium erfolgen kann. Um das Autobahnstreckennetz mit allen Streckenabschnitten vollständig zu charakterisieren, sind auch Autobahnkreuze und Autobahndreiecke als Identifikationspunkte mit ihren Positionskoordinaten erfaßt.

Im Prinzip wäre es möglich, die effektive Abrechnung der Nutzungsgebühren beispielsweise monatlich anhand der jeweils aufgezeichneten Benutzungen an Gebühreneinzahlungsstellen vorzunehmen. Wesentlich vorteilhafter ist es jedoch, das mobile Speichermedium ähnlich wie eine Telefonkarte zu handhaben. Das bedeutet, daß eine solche "Autobahngebührenkarte" vom Benutzer gekauft wird und er hierdurch im voraus bereits die Berechtigung zur Autobahnbenutzung in einem festgelegten Umfang (Benutzungsguthaben) erwirbt. Im Falle der tatsächlichen Benutzung der Autobahn wird dann sukzessive die Gebühr für jede befahrene Teilstrecke von dem aktuellen Benutzungsguthaben abgebucht.

Wenn neben den Identifikationspunkten des Autobahnstreckennetzes auch die Nutzungstarife auf dem mobilen Speichermedium abgelegt sind, hat dies den großen Vorteil, daß dann auf einfache Weise gestufte Nutzungsberechtigungen realisiert werden können. Beispielsweise ist es möglich, spezielle Autobahngebührenkarten für die Benutzung bestimmter Regionen oder für bestimmte Streckenverläufe (z.B. Transitautobahnen) auszugeben. Soweit für unterschiedliche Fahrzeugtypen (PKW, Motorrad, Bus, LKW) unterschiedliche Gebührensätze zur Anwendung kommen sollen, kann auch dies problemlos durch entsprechend unterschiedlich gestaltete und mit anderen Tarifen versehene AuTobahngebührenkarten berücksichtigt werden.

Die fahrzeuginternen Komponenten der erfindungsgemäßen Einrichtung sind als kompaktes mobiles Verbuchungsgerät ausgebildet. Solche Geräte bieten sich insbesondere für die Gebührenabrechnung von ausländischen Fahrzeugen an, die keine geeignete Einrichtung für eine Gebührenabrechnung aufweisen. An Grenzstationen können dann neben Autobahnbenutzungskarten auch Verbuchungsgeräte leihweise gegen entsprechendes Entgelt ausgegeben werden.

Die Funktion des Verbuchungsgerätes wird vorzugsweise dadurch aktiviert, daß die Autobahnbenutzungskarte in eine entsprechende Lese/Schreib-Einrichtung eingeführt wird. Bei Stillstand des Fahrzeugs kann vorgesehen sein, daß das Gerät automatisch abgeschaltet wird, um es bei Fortsetzung der Fahrt automatisch wieder zu aktivieren. Vorteilhaft sind fahrzeuginterne Anzeigeeinrichtungen, die den Fahrer auf das Einfahren in eine gebührenpflichtige Zone aufmerksam machen und darüber hinaus rechtzeitig (ähnlich einer Tankanzeige) deutliche Hinweise auf die bevorstehende Erschöpfung des Benutzungsguthabens geben. Zweckmäßig ist eine laufende Anzeige des aktuellen Benutzungsguthabens. Vorzugsweise sind entlang der Autobahnteilstrecken (z.B. an Raststätten, Tankstellen, Parkplätzen) Stationen vorgesehen, an denen ein Auffüllen des Benutzungsguthabens gegen entsprechendes Entgelt oder der Kauf einer neuen Autobahnbenutzungskarte erfolgen kann.

Die erfindungsgemäße Einrichtung gestattet im Bedarfsfall eine sehr differenzierte Nutzungsabrechnung, bei der auch die Intensität der Nutzung (z.B. Erfassung der Aufenthaltsdauer in einer gebührenpflichtigen Zone) berücksichtigt werden kann. Zu diesem Zweck können spezielle Eingabemöglichkeiten für entsprechende Parameter vorgesehen sein. Eine sinnvolle Variante wäre beispielsweise, in verkehrsarmen Zeiten (z.B. saisonabhängig oder nachts) niedrigere Tarife für einzelne Teilstrecken oder das gesamte Autobahnnetz anzuwenden, um durch entsprechende Verkehrsverlagerungen eine Entlastung der stark belasteten Zeiten zu erzielen.

Um eine unberechtigte Benutzung gebührenpflichtiger Streckenabschnitte oder Zonen zu vermeiden und entsprechenden Mißbrauch verfolgbar zu machen, ist eine nach außen wirkende Signaleinrichtung (z.B. HF-Sender, RF-Sender, Laserdiode für Infrarotsignal usw.) zweckmäßig, die bei ordnungsgemäßem Abrechnungsverfahren und folglich rechtmäßiger Straßenbenutzung arbeitet und ein "In-Ordnung"-Signal sendet. Extern angeordnete Empfangsstationen (z.B. in Kontrollfahrzeugen installiert, die an Autobahnausfahrten eingesetzt werden) können dadurch die Fahrzeuge erfassen, die kein Gebührenerfassungssystem mitführen oder die ihr installiertes System nicht ordnungsgemäß betreiben, also die fällige Gebühr nicht entrichten. Alternativ oder ergänzend kann auch eine nach außen wirkende Signaleinrichtung (z.B. eine farbige Kontrolleuchte) verwendet werden, die automatisch aktiviert wird, wenn nach Verbrauch des Benutzungsguthabens die Fahrt innerhalb des gebührenpflichtigen Bereichs fortgesetzt wird. Es kann auch vorgesehen sein, in derartigen Fällen ein Funksignal, das eine Identifizierung des Fahrzeugs ermöglicht, an eine Überwachungsstation zu senden. Der Umfang der unzulässigen Weiterbenutzung der Autobahn kann auf dem mobilen Speichermodul für Zwecke der lokalen Verkehrskontrolle in solchen Fällen aufgezeichnet werden.

Ein wesentlicher Vorteil der erfindungsgemäßen Lösung ist es, daß sie keine oder zumindest nicht in erheblichem Umfang eine Neueinrichtung von Infrastruktur erfordert, sondern die Nutzung von Einrichtungen ermöglicht, die ohnehin bereits vorhanden, also unabhängig von dem der Nutzungsabrechnung unterliegenden jeweiligen Gebiet installiert sind. Ein weiterer wichtiger Vorteil ist darin zu sehen, daß die Feststellung und Abrechnung gebührenpflichtiger Nutzungen autonom im Fahrzeug selbst stattfindet und somit hinsichtlich des Datenschutzes günstige Bedingungen vorliegen, die eine unerwünschte Überwachung des Fahrverhaltens ausschließen. Es ist vorgesehen, daß keine Informationen gespeichert bleiben, die eine Identifizierung der vom jeweiligen Fahrzeug zurückgelegten Gesamtstrecke innerhalb des gebührenpflichtigen Bereichs ermöglichen würden. Die zwischengespeicherten Informationen über durchfahrene Teilstrecken werden nach erfolgter Abbuchung der Nutzungsgebühr vom Benutzungsguthaben gelöscht. Neu im Speicher abgelegt werden jeweils die Koordinaten des zuletzt vom Fahrzeug passierten Identifikationspunktes, der den Beginn der aktuell befahrenen Teilstrecke repräsentiert. Wenn es allerdings ausdrücklich gewünscht wird, können bei Bedarf auch spezielle Abbuchungsgeräte zur Verfügung gestellt werden, die eine lückenlose Protokollierung aller zurückgelegten Wegstrecken vornehmen, um z.B. für Transportunternehmen die automatische Führung eines Fahrterbuchs zu ermöglichen.

Wie anfangs bereits geschildert, ist der Einsatz der erfindungsgemäßen Einrichtung keineswegs auf den Straßenverkehr beschränkt, sondern ist auf eine Vielzahl anderer Anwendungen übertragbar.

## Patentansprüche

1. Nutzungsabrechnungssystem mit einer Einrichtung zur Identifizierung von Wegstrecken, die von einem bewegten Objekt innerhalb eines Wegstreckennetzes zurückgelegt werden, oder von festgelegten geographischen Zonen, die vom Objekt betreten werden,
mit folgenden Komponenten:
a) ein außerhalb des bewegten Objektes und von den zurücklegbaren Wegstrecken und festgelegten geographischen Zonen unabhängig installiertes System zur drahtlosen Übermittlung von Informationen zur Erkennung der aktuellen, geographischen Position des Objektes;
b) ein vom bewegten Objekt mitgeführtes Empfangssystem für die drahtlos übermittelten Informationen zur Positionserkennung;
c) eine erste vom Objekt mitgeführte Speichereinrichtung zur temporären Speicherung von Daten der aktuellen geographischen Position des Objektes;
d) eine zweite vom Objekt mitgeführte Speichereinrichtung zur permanenten Speicherung vorgegebener geographischer Positionen (Identifizierungspunkte) zur eindeutigen Charakterisierung der einzelnen Wegstrecken des Wegstreckennetzes und/oder der festgelegten geographischen Zonen;
e) eine vom Objekt mitgeführte Vergleichseinrichtung zum Vergleich der in regelmäßigen Abständen ermittelten jeweiligen geographischen Position des Objektes mit den Positionsdaten der Identifizierungspunkte;
f) eine vom Objekt mitgeführte Identifizierungseinrichtung zur Identifizierung der vom Objekt jeweils zurückgelegten Wegstrecke und/oder der betretenen oder verlassenen festgelegten geographischen Zone anhand der von der Vergleichseinrichtung ermittelten, mit Identifizierungspunkten übereinstimmenden geographischen Positionen, die vom Objekt gerade passiert wurden;
g) ein mobiles, mit der Identifizierungseinrichtung informationstechnisch verbindbares Speichermodul, in dem die jeweils identifizierte aktuell zurückgelegte Wegstrecke und/oder die Anwesenheit in einer festgelegten geographischen Zone verbucht wird;
h) das Empfangssystem, die erste Speichereinrichtung, die Vergleichseinrichtung und die Identifizierungseinrichtung sind zu einem mobilen Verbuchungsgerät zusammengefaßt.

2. Nutzungsabrechnungssystem nach Anspruch 1,
dadurch gekennzeichnet,
daß vom Objekt eine Recheneinheit mitgeführt wird, die aus den drahtlos übermittelten Informationen die geographische Position des Objektes jeweils berechnet, wenn die drahtlos übermittelten Informationen selbst noch keine Positionsdaten darstellen.

3. Nutzungsabrechnungssystem nach einem der Ansprüche 1 bis 2,
dadurch gekennzeichnet,
daß das System zur drahtlosen Übermittlung von Informationen über geographische Positionen ein Satelliten-Navigationssystem ist.

4. Nutzungsabrechnungssystem nach Anspruch 3,
dadurch gekennzeichnet,
daß das mitgeführte Empfangssystem zum Empfang von Korrektursignalen eingerichtet ist, mit denen die Genauigkeit der Positionserkennung verbessert werden kann.

5. Nutzungsabrechnungssystem nach einem der Ansprüche 3 oder 4,
dadurch gekennzeichnet,
daß vom Objekt ein Dead-Reckoning-Sensor, insbesondere in Form einer Magnetfeldsonde, mitgeführt wird, der bei kurzzeitigem Ausfall des Navigationssystems eine kontinuierliche Fortschreibung der Positionsdaten ermöglicht.

6. Nutzungsabrechnungssystem nach Anspruch 1,
dadurch gekennzeichnet,
daß das System zur drahtlosen Übermittlung von Informationen über geographische Positionen in ein zellular aufgebautes Funktelefonnetz integriert ist, wobei das Empfangssystem im Objekt ein Funktelefon ist und die Positionsbestimmung anhand unterschiedlicher Signallaufzeiten vom Objekt zu einzelnen Empfangsstationen des Funktelefonnetzes durch ein Rechnersystem des Funktelefonnetzes erfolgt und die Ergebnisse als Positionsdaten an das Objekt übermittelt werden und wobei das Funktelefon mit einer Einrichtung zur regelmäßigen Aussendung seiner Kennungsdaten und zum Empfang der Positionsdaten auch außerhalb der eigentlichen Telefonbenutzung versehen ist.

7. Nutzungsabrechnungssystem nach einem der Ansprüche 1 bis 2,
dadurch gekennzeichnet,
daß das System zur drahtlosen Übermittlung von Informationen über geographische Positionen ein Funkpeilsystem ist.

8. Nutzungsabrechnungssystem nach einem der Ansprüche 1 bis 7,
dadurch gekennzeichnet,
das das mobile Speichermodul eine Magnetstreifen- oder Chip-Speicherkarte ist.

9. Nutzungsabrechnungssystem nach einem der Ansprüche 1 bis 8.
dadurch gekennzeichnet,
daß die zweite Speichereinrichtung mit den Positionsdaten der Identifizierungspunkte Bestandteil des mobilen Speichermoduls ist.

10. Nutzungsabrechnungssystem nach einem der Ansprüche 1 bis 9,
wobei das bewegte Objekt ein Straßenfahrzeug und das Wegstreckennetz ein Autobahnnetz ist,
dadurch gekennzeichnet,
daß die permanent gespeicherten Daten der Identifizierungspunkte sich auf die Anschlußstellen (Ein- und Ausfahrten) der Autobahn und jeweils auf mindestens einen zwischen zwei unmittelbar aufeinanderfolgenden Anschlusstellen liegenden Zwischenpunkt der Autobahnwegstrecke zwischen diesen beiden Anschlußstellen beziehen.

11. Nutzungsabrechnungssystem nach einem der Ansprüche 1 bis 10,
dadurch gekennzeichnet,
daß das Verbuchungsgerät in seiner Funktion durch das Verbinden des mobilen Speichermoduls aktivierbar ist.

12. Nutzungsabrechnungssystem nach einem der Ansprüche 1 bis 11,
dadurch gekennzeichnet,
daß das Verbuchungsgerät Bestandteil eines Autoradios oder eines fahrzeuginternen Terminals eines Verkehrsleitsystems ist.

13. Nutzungsabrechnungssystem nach einem der Ansprüche 1 bis 12,
dadurch gekennzeichnet,
daß die Verbuchung einer identifizierten, in einem gebührenpflichtigen Wegstreckennetz aktuell zurückgelegten Wegstrecke und/oder das Betreten einer festgelegten geographischen Zone jeweils in Form einer Abbuchung von einem in dem mobilen Speichermodul gespeicherten Guthabenbetrag (Benutzungsguthaben) durchführbar ist, wobei der Abbuchungsbetrag anhand von Gebühreninformationen über das Wegstreckennetz ermittelbar ist, die entweder in der zweiten Speichereinrichtung oder in dem mobilen Speichermodul permanent gespeichert sind.

14. Nutzungsabrechnungssystem nach Anspruch 13,
dadurch gekennzeichnet,
daß an ausgewählten Punkten, vorzugsweise an Rast- und Tankstellen von Autobahnen, Stationen zur Auffüllung des gespeicherten Guthabenbetrags vorgesehen sind.

15. Nutzungsabrechnungssystem nach einem der Ansprüche 13 bis 14,
dadurch gekennzeichnet,
daß eine erste Anzeigeeinrichtung vorgesehen ist, die im Objekt ein Signal ausgibt, das auf die baldige Erschöpfung des Guthabenbetrags aufmerksam macht.

16. Nutzungsabrechnungssystem nach einem der Ansprüche 1 bis 15,
dadurch gekennzeichnet,
daß das Verbuchungsgerät Eingabemöglichkeiten aufweist für Parameter, die die Zeit und/oder die Intensität der Nutzung des Wegstreckennetzes durch das Objekt kennzeichnen.

17. Nutzungsabrechnungssystem nach einem der Ansprüche 1 bis 16,
dadurch gekennzeichnet,
daß im Objekt eine zweite Anzeigeeinrichtung vorgesehen ist, die beim Eintritt in eine der Nutzungsabrechnung unterliegende Wegstrecke oder geographische Zone von der Identifizierungseinrichtung aktivierbar ist und einen entsprechenden Hinweis im Objekt signalisiert.

18. Nutzungsabrechnungssystem nach einem der Ansprüche 13 bis 17,
dadurch gekennzeichnet,
daß vom Objekt eine nach außen wirkende Signaleinrichtung mitgeführt wird, die nach Verbrauch des Guthabenbetrags im Falle des weiteren Aufenthalts auf einer der Nutzungsabrechnung unterliegenden Wegstrecke oder in einer entsprechenden festgelegten geographischen Zone aktiviert wird.

19. Nutzungsabrechnungssystem nach einem der Ansprüche 13 bis 18,
dadurch gekennzeichnet,
daß vom Objekt eine nach außen wirkende Signaleinrichtung mitgeführt wird, die ein 'In-Ordnung'-Signal aussendet, solange eine ordnungsgemäße Nutzungsabrechnung stattfindet.

20. Nutzungsabrechnungssystem nach Anspruch 18 oder 19,
dadurch gekennzeichnet,
daß die nach außen wirkende Signaleinrichtung ein optisches Signal, insbesondere ein Infrarotsignal aussendet.

21. Nutzungsabrechnungssystem nach Anspruch 18 oder 19,
dadurch gekennzeichnet,
daß die nach außen wirkende Signaleinrichtung ein Funksignal aussendet.

## Claims

1. A utilisation charging system comprising a device for identifying route sections over which a moving object has travelled within a transport network or fixed geographic zones into which the object has entered,
having the following components:
a) a system installed externally of the moving object and independently of the travellable route sections and the fixed geographic zones, said system being provided for wireless transmission of information for recognition of the current geographic position of the object;
b) a receiver system carried by the moving object for receiving the wirelessly transmitted position recognition information;
c) a first memory device carried by the object for temporary storage of data relating to the current geographic position of the object;
d) a second memory device carried by the object for permanent storage of predetermined geographic positions (identification points) for clear characterisation of the individual sections of the transport network and/or the fixed geographic zones;
e) a comparison device carried by the object for comparing the respective geographic position of the object detected at regular intervals with the identification point positional data;
f) an identification device carried by the object for identifying the route section travelled in each case by the object and/or the fixed geographic zone which has been entered or left by means of the geographic positions, detected by the comparison device and corresponding with identification points, through which the object has just passed;
g) a mobile memory module, connectable by computer to the identification device, in which the respectively identified, currently travelled route section and/or presence in a fixed geographic zone is recorded;
h) the receiver system, the first memory device, the comparison device and the identification device are combined to form a mobile recording apparatus.

2. A utilisation charging system according to claim 1,
characterised in that
a calculator unit is carried by the object for calculation of the respective geographic position of the object from the wirelessly transmitted information, when the wirelessly transmitted information does not itself include any positional data.

3. A utilisation charging system according to either one of claims 1 or 2,
characterised in that
the system for wireless transmission of information relating to geographic position is a satellite navigation system.

4. A utilisation charging system according to claim 3,
characterised in that
the receiver system which is carried is adjusted to receive correction signals with which position recognition may be made more accurate.

5. A utilisation charging system according to either one of claims 3 or 4,
characterised in that
a dead-reckoning sensor, especially in the form of a magnetic field probe, is carried by the object and permits continuous extrapolation of the positional data in the event of temporary breakdown of the navigation system.

6. A utilisation charging system according to claim 1,
characterised in that
the system for wireless transmission of information relating to geographic position is integrated into a cellular radio telephone network, wherein the receiver system in the object is a radio telephone and position determination is effected by a computer system of the radio telephone network using the different signal transit times between the object and the individual receiving stations of the radio telephone network and the results are transmitted to the object as positional data, and wherein the radio telephone is provided with a device for regular emission of its identifying data and for receiving the positional data even when the telephone is not actually in use.

7. A utilisation charging system according to either one of claims 1 or 2,
characterised in that
the system for wireless transmission of information relating to geographic positions is a radio direction-finding system.

8. A utilisation charging system according to any one of claims 1 to 7,
characterised in that
the mobile memory module is a magnetic strip or chip memory card.

9. A utilisation charging system according to any one of claims 1 to 8,
characterised in that
the second memory device with the identification point positional data is a component of the mobile memory module.

10. A utilisation charging system according to any one of claims 1 to 9, wherein the moving object is a road vehicle and the transport network is a motorway network,
characterised in that
the permanently stored data relating to the identification points relate to the motorway junctions (entries and exits) and in each case to at least one intermediate point lying between two directly successive junctions on the section of motorway between these two junctions.

11. A utilisation charging system according to any one of claims 1 to 10,
characterised in that
the recording device may be actuated by connection of the mobile memory module.

12. A utilisation charging system according to any one of claims 1 to 11,
characterised in that
the recording device is a component of a car radio or a traffic routing system terminal internal to the vehicle.

13. A utilisation charging system according to any one of claims 1 to 12,
characterised in that
recording of an identified route section currently travelled within a toll transport network and/or entry into a fixed geographic zone may in each case be carried out in the form of a debit from a credit balance (utilisation credit) stored in the mobile memory module, wherein the amount to be debited may be determined using transport network toll information which is stored permanently either in the second memory device or in the mobile memory module.

14. A utilisation charging system according to claim 13,
characterised in that,
at selected points, preferably at motorway service stations, points are provided at which the stored credit balance may be replenished.

15. A utilisation charging system according to either one of claims 13 or 14,
a first indicator device is provided, which outputs a signal in the object to indicate imminent exhaustion of the credit balance.

16. A utilisation charging system according to any one of claims 1 to 15,
characterised in that
the recording device comprises input possibilities for parameters which identify the time and/or intensity of utilisation of the transport network by the object.

17. A utilisation charging system according to any one of claims 1 to 16,
characterised in that
a second indicator device is provided in the object which may be actuated by the identification device upon entry into a route section or geographic zone subject to utilisation charging and indicates the same within the object.

18. A utilisation charging system according to any one of claims 13 to 17,
characterised in that an externally acting signal device is carried by the object which is actuated after consumption of the credit balance in the event of continued presence on a route section subject to utilisation charging or in a corresponding fixed geographic zone.

19. A utilisation charging system according to any one of claims 13 to 18,
characterised in that
an externally acting signal device is carried by the object, which emits an "OK" signal, as long as utilisation charging is being correctly implemented.

20. A utilisation charging system according to claim 18 or claim 19,
characterised in that
the externally acting signal device emits a visual signal, in particular an infrared signal.

21. A utilisation charging system according to claim 18 or claim 19,
characterised in that
the externally acting signal device emits a radio signal.

## Revendications

1. Système de règlement en fonction de l'utilisation comportant un dispositif d'identification de tronçons de voie qui sont parcourus par un objet mobile à l'intérieur d'un réseau de tronçons de voie, ou de zones géographiques fixées dans lesquelles l'objet pénètre, comportant les composants suivants :
a) un système de transmission radioélectrique d'informations de reconnaissance de la position géographique courante de l'objet mobile, installé en dehors de l'objet et indépendamment des tronçons de voie qui peuvent être parcourus et des zones géographiques fixées ;
b) un système de réception, emporté par l'objet mobile, pour les informations de reconnaissance de position transmises de manière radioélectrique ;
c) un premier dispositif de mémorisation, emporté par l'objet, servant à l'enregistrement temporaire de données concernant la position géographique courante de l'objet ,
d) un second dispositif de mémorisation, emporté par l'objet, servant à l'enregistrement permanent de positions géographiques prédéfinies (points d'identification) destinées à la caractérisation univoque des tronçons de voie du réseau de tronçons de voie et/ou des zones géographiques fixées ;
e) un dispositif de comparaison, emporté par l'objet, servant à la comparaison de la position géographique courante de l'objet, établie à intervalles réguliers, aux données de position des points d'identification ;
f) un dispositif d'identification, emporté par l'objet, servant à l'identification du tronçon de voie que l'objet est en train de parcourir, et/ou de la zone géographique fixée dans laquelle il a pénétré ou qu'il a quittée, à l'aide des positions géographiques, établies par le dispositif de comparaison et concordant avec des points d'identification, par lesquelles l'objet vient juste de passer ;
g) un support d'information mobile pouvant être relié sur le plan informatique au dispositif d'identification, dans lequel on comptabilise chaque tronçon de voie en cours d'utilisation identifié et/ou la présence dans une zone géographique fixée ;
h) le système de réception, le premier dispositif de mémorisation, le dispositif de comparaison et le dispositif d'identification sont regroupés en un appareil de comptabilisation mobile.

2. Système de règlement en fonction de l'utilisation selon la revendication 1,
caractérisé en ce que
l'objet emporte une unité de calcul qui calcule la position géographique de l'objet à partir des informations transmises de manière radioélectrique à chaque fois que les informations transmises de manière radioélectrique ne constituent elles-mêmes pas encore des données de position.

3. Système de règlement en fonction de l'utilisation selon l'une des revendications 1 à 2,
caractérisé en ce que
le système de transmission radioélectrique d'informations concernant des positions géographiques est un système de navigation par satellite.

4. Système de règlement en fonction de l'utilisation selon la revendication 3,
caractérisé en ce que
le système de réception embarqué est aménagé pour recevoir des signaux correcteurs grâce auxquels il est possible d'améliorer la précision de la reconnaissance de position.

5. Système de règlement en fonction de l'utilisation selon l'une des revendications 3 ou 4,
caractérisé en ce que
l'objet emporte un capteur de navigation à l'estime, notamment sous forme de sonde de champ magnétique, qui permet une mise à jour continue des données de position en cas de panne temporaire du système de navigation.

6. Système de règlement en fonction de l'utilisation selon la revendication 1,
caractérisé en ce que
le système de transmission radioélectrique d'informations concernant des positions géographiques est intégré à un réseau de radiotéléphonie structuré de manière cellulaire, le système de réception situé à l'intérieur de l'objet étant un radiotéléphone, la détermination de position ayant lieu à l'aide d'un système de calcul du réseau de radiotéléphonie au moyen des durées de propagation de signal différentes depuis l'objet jusqu'à des stations de réception distinctes du réseau de radiotéléphonie, les résultats étant transmis en tant que données de position à l'objet et le radiotéléphone étant muni d'un dispositif d'émission régulière de ses données d'identification et de réception des données de position, y compris en dehors de son utilisation en tant que téléphone proprement dit.

7. Système de règlement en fonction de l'utilisation selon l'une des revendications 1 à 2,
caractérisé en ce que
le système de transmission radioélectrique d'informations concernant des positions géographiques est un système radiogoniométrique.

8. Système de règlement en fonction de l'utilisation selon l'une des revendications 1 à 7,
caractérisé en ce que
le support d'information mobile est une carte à mémoire à piste magnétique ou à microprocesseur.

9. Système de règlement en fonction de l'utilisation selon l'une des revendications 1 à 8,
caractérisé en ce que
le second dispositif de mémorisation comportant les données de position des points d'identification est une partie constitutive du support d'information mobile.

10. Système de règlement en fonction de l'utilisation selon l'une des revendications 1 à 9,
dans lequel l'objet mobile est un véhicule routier et le réseau de tronçons de voie est un réseau autoroutier,
caractérisé en ce que
les données mémorisées de manière permanente concernant les points d'identification se rapportent aux points de raccordement (entrées et sorties) de l'autoroute et, à chaque fois, à au moins un point intermédiaire situé entre deux points de raccordement consécutifs du tronçon de voie d'autoroute situé entre ces deux points de raccordement.

11. Système de règlement en fonction de l'utilisation selon l'une des revendications 1 à 10,
caractérisé en ce que
l'appareil de comptabilisation peut être mis en fonction en connectant le support d'information mobile.

12. Système de règlement en fonction de l'utilisation selon l'une des revendications 1 à 11,
caractérisé en ce que
l'appareil de comptabilisation est une partie constitutive d'autoradio ou de terminal embarqué de système d'aide à la circulation automobile.

13. Système de règlement en fonction de l'utilisation selon l'une des revendications 1 à 12,
caractérisé en ce que
la comptabilisation d'un tronçon de voie identifié en cours d'utilisation dans un réseau de tronçons de voie soumis à redevance et/ou de l'entrée dans une zone géographique fixée peut à chaque fois être réalisée sous forme de prélèvement effectué sur un montant créditeur (crédit d'utilisation) mémorisé dans le support d'information mobile, le montant du prélèvement pouvant être établi à l'aide d'informations de redevance concernant le réseau de tronçons de voie qui sont mémorisées de manière permanente soit dans le second dispositif de mémorisation soit dans le support d'information mobile.

14. Système de règlement en fonction de l'utilisation selon la revendication 13,
caractérisé en ce que
on prévoit des stations de reconstitution du montant créditeur mémorisé, de préférence sur les aires de repos et dans les postes de distribution de carburant d'autoroute, à des points sélectionnés.

15. Système de règlement en fonction de l'utilisation selon l'une des revendications 13 à 14,
caractérisé en ce que
on prévoit un premier dispositif d'affichage qui délivre à l'intérieur de l'objet un signal qui indique que le montant créditeur va bientôt être épuisé.

16. Système de règlement en fonction de l'utilisation selon l'une des revendications 1 à 15,
caractérisé en ce que
l'appareil de comptabilisation présente des possibilités d'entrée de paramètres qui indiquent la période et/ou l'intensité d'utilisation du réseau de tronçons de voie par l'objet.

17. Système de règlement en fonction de l'utilisation selon l'une des revendications 1 à 16,
caractérisé en ce que, dans l'objet,
on prévoit un second dispositif d'affichage qui peut être mis en fonction par le dispositif d'identification lors de l'entrée sur un tronçon de voie ou dans une zone géographique soumis à redevance et qui donne une indication correspondante à l'intérieur de l'objet.

18. Système de règlement en fonction de l'utilisation selon l'une des revendications 13 à 17,
caractérisé en ce que
l'objet emporte un dispositif de signalisation agissant vers l'extérieur qui est mis en fonction après épuisement du montant créditeur en cas de poursuite du séjour sur un tronçon de voie soumis à règlement en fonction de l'utilisation ou dans une zone géographique fixée correspondante.

19. Système de règlement en fonction de l'utilisation selon l'une des revendications 13 à 18,
caractérisé en ce que
l'objet emporte un dispositif de signalisation agissant vers l'extérieur qui émet un signal "en règle" tant qu'un règlement en fonction de l'utilisation a lieu en bonne et due forme.

20. Système de règlement en fonction de l'utilisation selon la revendication 18 ou 19,
caractérisé en ce que
le dispositif de signalisation agissant vers l'extérieur émet un signal optique, notamment un signal infrarouge.

21. Système de règlement en fonction de l'utilisation selon la revendication 18 ou 19,
caractérisé en ce que
le dispositif de signalisation agissant vers l'extérieur émet un signal radioélectrique.
